# EUROPEAN PATENT SPECIFICATION

(11) **EP 3 569 475 B1**
(45) Date of publication and mention of the grant of the patent: **30.12.2020**
(21) Application number: 19174318.6
(22) Date of filing: 14.05.2019
(51) Int. Cl.: B62D 6/00, B62D 5/00

(54) **STEERING CONTROL UNIT**
LENKSTEUERUNGSEINHEIT
UNITÉ DE COMMANDE DE DIRECTION

(30) Priority: 16.05.2018 JP 2018094698
(43) Date of publication of application: 20.11.2019
(73) Proprietor: JTEKT CORPORATION, Osaka 542-8502 (JP)
(72) Inventor: ANRAKU, Koji, Osaka-shi, Osaka 542-8502 (JP); NAMIKAWA, Isao, Osaka-shi, Osaka 542-8502 (JP); KAKIMOTO, Yusuke, Osaka-shi, Osaka 542-8502 (JP)
(74) Representative: Winter, Brandl, Fürniss, Hübner, Röss, Kaiser, Polte - Partnerschaft mbB

(56) References cited:
- EP-A1- 3 219 580
- WO-A1-2014/108986

## Description

### BACKGROUND OF THE INVENTION

### 1. Field of the Invention

The invention relates to a steering control unit.

### 2. Description of Related Art

A steer-by-wire steering system isolates transmission of power between a steering input device that receives a steering input from a driver and a steering operation device that steers steered wheels in accordance with the steering input. In the steer-by-wire steering system, a force exerted on the steered wheels, such as a reaction force exerted by a road surface, is not mechanically transmitted to a steering wheel. In some steering control units for controlling the steer-by-wire steering system, a steering-side actuator (a steering-side motor) supplies a steering wheel with a steering reaction force that takes into account information about a road surface, thereby informing a driver of the road surface information.

For example, Japanese Patent Application Publication No. 2017-165219 (JP 2017-165219 A) focuses on an axial force exerted on a steered shaft coupled to steered wheels and discloses a steering control unit that determines a steering reaction force by taking into account an allocated axial force to which an ideal axial force and a road-surface axial force are allocated in a predetermined allocation ratio. The ideal axial force is calculated from a target steered angle corresponding to a target steering angle of a steering wheel. The road-surface axial force is calculated from a drive current to a steered-side motor that drives a steered-side actuator.

In the steering control unit disclosed in JP 2017-165219 A, an end reaction force as a reaction force component to be taken into account to determine the steering reaction force is added to the allocated axial force so as to reduce the impact of a so-called end hit where a rack end, i.e., an end of a rack shaft hits a rack housing. The end reaction force is added when the target steered angle corresponding to the target steering angle exceeds a steering angle threshold corresponding to an imaginary rack end adjacent position that is set adjacent to an imaginary rack end position and that is set closer to a neutral position than the imaginary rack end position. The imaginary rack end position is set closer to the neutral position than an actual rack end position that mechanically limits axial movement of the rack shaft. This makes it less likely that a driver turns the steering wheel until the end hit occurs, thus reducing the likelihood of the steered-side actuator being impacted.

It may be preferable to add such a steering reaction force in order to inform a driver of, for example, the following situations: a situation where steered wheels hit an obstruction, such as a curb; and a situation where a steered angle of steered wheels cannot follow a target value due to, for example, electric power shortage that causes lack of output torque of a steered-side actuator (a steered-side motor) for steering the steered wheels. It is assumed here that a reaction force component for informing a driver of such situations is employed in JP 2017-165219 A. In this case, the reaction force component is superimposed on the end reaction force, for example, when the steered wheels hit an obstruction, such as a curb, with the steering angle close to the steering angle threshold. This may supply an excessively large steering reaction force.

### SUMMARY OF THE INVENTION

A purpose of the invention is to provide a steering control unit for supplying an appropriate steering reaction force in accordance with situations.

An aspect of the invention provides a steering control unit for controlling a steering system having a first structure or a second structure. The first structure is such that a steering input device that receives a steering input is mechanically separated from a steering operation device that steers a steered wheel in accordance with the steering input. The second structure is such that the steering input device is selectively mechanically coupled and decoupled to and from the steering operation device. The steering control unit includes a control circuit that controls actuation of a steering-side motor that supplies the steering input device with a steering reaction force that opposes the steering input. The control circuit includes an end reaction force calculation circuit, at least one additional reaction force calculation circuit, and a reaction force selector circuit. When a steering angle of a steering wheel coupled to the steering input device exceeds a steering angle threshold that is set according to the steering system, the end reaction force calculation circuit calculates an end reaction force that increases the steering reaction force on the basis of a first condition that indicates an increase in absolute value of the steering angle. The at least one additional reaction force calculation circuit calculates at least one additional reaction force that increases the steering reaction force on the basis of a second condition different from the first condition. The reaction force selector circuit selects one reaction force with a greatest absolute value from the end reaction force and the at least one additional reaction force. The control circuit calculates target reaction torque as a target value for the steering reaction force by taking into account the reaction force selected by the reaction force selector circuit.

According to the above aspect, since the additional reaction force is taken into account to calculate the steering reaction force, a driver can be informed of situations other than a situation where the steering angle is close to the steering angle threshold. Further, the reaction force selector circuit selects one reaction force with the greatest absolute value from the end reaction force and the at least additional reaction force, and the selected reaction force is taken into account to calculate the target reaction torque. This feature reduces the likelihood of the steering reaction force becoming excessively large.

In the above aspect of the steering control unit, the at least one additional reaction force calculation circuit may calculate the at least one additional reaction force on the basis of a gain that represents the degree of similarity to a situation where the at least one additional reaction force is required to be supplied. It is assumed here that the additional reaction force is calculated, for example, as follows: a determination is made whether a situation where the additional reaction force is required to be supplied occurs; and if the determination is made that the situation occurs, the additional reaction force is set to a value greater than zero; whereas if the determination is not made that the situation occurs, the additional reaction force is set to zero. According to this assumed approach, the value of the additional reaction force changes sharply before and after the determination is made that the situation occurs. If the additional reaction force based on such alternative determination is selected by the reaction force selector circuit, the steering reaction force may change sharply, so that a driver may feel a sense of discomfort. In contrast, according to the above aspect, the additional reaction force is calculated on the basis of the gain that represents the degree of similarity to the situation where the additional reaction force is required to be supplied. This feature reduces the likelihood of the additional reaction force changing sharply, thus providing good steering feel.

In the above aspect of the steering control unit, the control circuit may include an obstruction-hit reaction force calculation circuit as the at least one additional reaction force calculation circuit, and when the steered wheel hits an obstruction, the obstruction-hit reaction force calculation circuit calculates an obstruction-hit reaction force as the at least one additional reaction force. According to this structure, for example, if a situation occurs where the steered wheel hits an obstruction, such as a curb, with a steered angle corresponding to when a vehicle moves substantially straight forward, a driver can be informed of the situation.

In the above aspect of the steering control unit, the control circuit may include an ideal axial force calculation circuit, a road-surface axial force calculation circuit, and an allocated axial force calculation circuit. The ideal axial force calculation circuit calculates an ideal axial force that is based on a first value related to a rotation angle of a rotating shaft. The rotation angle is convertible to the steered angle of the steered wheel. The road-surface axial force calculation circuit calculates a road-surface axial force that is based on information about a road surface. The allocated axial force calculation circuit calculates an allocated axial force to which the ideal axial force and the road-surface axial force are allocated in a predetermined allocation ratio. The control circuit calculates the target reaction torque by taking into account the sum of the reaction force selected by the reaction force selector circuit and the allocated axial force. The obstruction-hit reaction force calculation circuit calculates an obstruction-hit gain on the basis of the product of a current gain and a second value, and calculates the obstruction-hit reaction force on the basis of the obstruction-hit gain. The current gain corresponds to a third value related to a drive current supplied to a steered-side motor that generates a steered force that steers the steered wheel. The second value is calculated by subtracting a proportion of the road-surface axial force to be allocated to the allocated axial force from a predetermined value. The predetermined value may be set such that when the proportion of the road-surface axial force to be allocated to the allocated axial force exceeds a proportion of the ideal axial force to be allocated to the allocated axial force, the second value becomes smaller than the proportion of the road-surface axial force to be allocated to the allocated axial force.

The road-surface axial force reflects a force exerted on the steered wheel by a road surface and balances output torque of the steered-side motor. Thus, the drive current supplied to the steered-side motor increases with an increase in the road-surface axial force. When the obstruction-hit reaction force is calculated on the basis of the current gain corresponding to the drive current supplied to the steered-side motor, the obstruction-hit reaction force increases with an increase in the drive current. Thus, the obstruction-hit reaction force based on the current gain increases with an increase in the road-surface axial force. In this case, when the proportion of the road-surface axial force to be allocated to the allocated axial force increases, the target reaction torque may become excessively large due to addition of the increased obstruction-hit reaction force. In this regard, according to the aspect, the current gain on the basis of which the obstruction-hit reaction force is calculated is multiplied by the second value that becomes smaller than the proportion of the road-surface axial force to be allocated to the allocated axial force when the proportion of the road-surface axial force increases. Thus, the current gain becomes small, so that the obstruction-hit reaction force is less likely to have a large value. Therefore, even when the proportion of the road-surface axial force in the allocated axial force increases, the obstruction-hit reaction force is less likely to have a large value, and the target reaction torque is less likely to become excessively large.

In the above aspect of the steering control unit, the control circuit may include a steered-side limit reaction force calculation circuit as the at least one additional reaction force calculation circuit, and when output torque of a steered-side motor that generates a steered force that steers the steered wheel is limited, the steered-side limit reaction force calculation circuit calculates a steered-side limit reaction force as the at least one additional reaction force.

According to this structure, for example, if a situation occurs where output torque of the steered-side motor is limited because a vehicle power supply is short of electric power, a driver can be informed of the situation.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram of a steer-by-wire steering system according to a first embodiment;
FIG. 2 is a block diagram of a steering control unit according to the first embodiment;
FIG. 3 is a block diagram of a reaction force component calculation circuit according to the first embodiment;
FIG. 4 is a block diagram of an obstruction-hit reaction force calculation circuit according to the first embodiment;
FIG. 5 is a block diagram of a steered-side limit reaction force calculation circuit according to the first embodiment;
FIG. 6 is a graph illustrating an example relationship between a steering angle and a target reaction torque;
FIG. 7 is a block diagram of an obstruction-hit reaction force calculation circuit according to a second embodiment; and
FIG. 8 is a schematic diagram of a steer-by-wire steering system according to a modification.

### DETAILED DESCRIPTION OF EMBODIMENTS

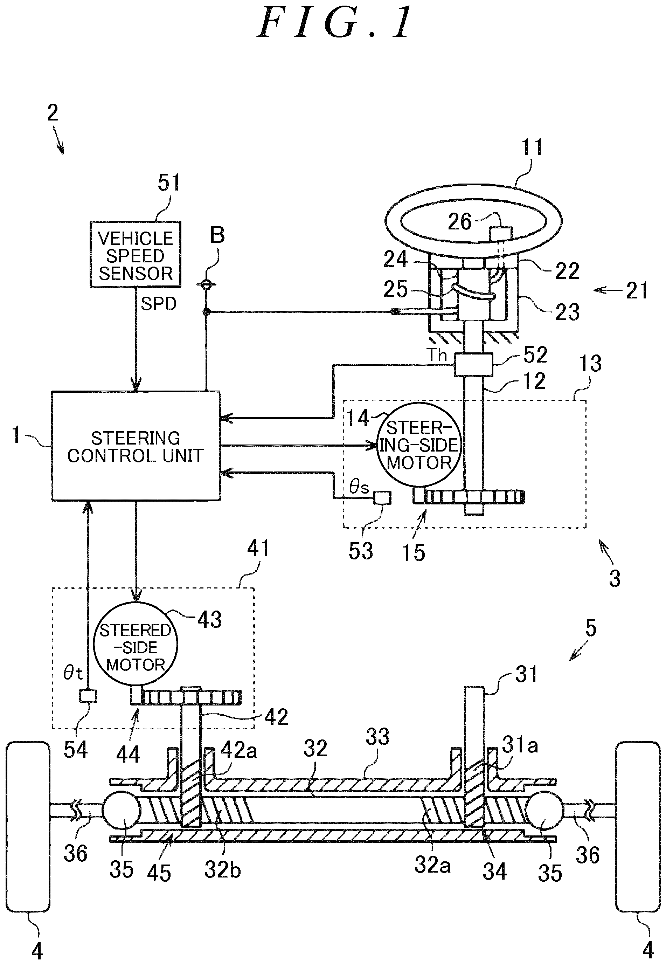

A steering control unit 1 according to a first embodiment of the invention is described below with reference to the drawings. As illustrated in FIG. 1, a steer-by-wire steering system 2 to be controlled by the steering control unit 1 includes the following: a steering input device 3 that receives a steering input by being operated by a driver; and a steering operation device 5 that steers steered wheels 4 in accordance with the steering input to the steering input device 3.

The steering input device 3 includes the following: a steering shaft 12 to which a steering wheel 11 is fixed; and a steering-side actuator 13 that selectively supplies the steering shaft 12 with a steering reaction force. The steering-side actuator 13 includes the following: a steering-side motor 14 as a drive source; and a steering-side speed reducer 15 that transmits rotation of the steering-side motor 14 to the steering shaft 12 while reducing the speed of the rotation.

The steering wheel 11 is coupled to a spiral cable device 21. The spiral cable device 21 includes the following: a first housing 22 fixed to the steering wheel 11; a second housing 23 fixed to a vehicle body; a tubular member 24 fixed to the second housing 23 and held in a space partitioned by the first and second housings 22 and 23; and a spiral cable 25 wound on the tubular member 24. The steering shaft 12 is inserted through the tubular member 24. The spiral cable 25 is an electrical wire and connects a horn 26 fixed to the steering wheel 11 to devices including a vehicle power supply B fixed to the vehicle body. The spiral cable 25 has a length sufficiently longer than the distance between the horn 26 and the vehicle power supply B. The spiral cable 25 supplies electric power to the horn 26 while allowing the steering wheel 11 to rotate within a range determined by the length.

The steering operation device 5 includes the following: a first pinion shaft 31 as a rotating shaft having a rotation angle convertible to a steered angle of the steered wheels 4; a rack shaft 32 as a steered shaft coupled to the first pinion shaft 31; and a rack housing 33 housing the rack shaft 32 such that the rack shaft 32 is reciprocatable therein. The first pinion shaft 31 and the rack shaft 32 form a predetermined crossed axes angle. First pinion teeth 31a formed in the first pinion shaft 31 mesh with first rack teeth 32a formed in the rack shaft 32, thereby providing a first rack and pinion mechanism 34. The rack shaft 32 is reciprocatively supported near one axial end by the first rack and pinion mechanism 34. Each end of the rack shaft 32 is coupled to one end of a tie rod 36 via a rack end 35 that is a ball joint. The other end of the tie rod 36 is coupled to a knuckle (not illustrated) having the steered wheel 4 mounted thereto.

The steering operation device 5 is coupled via a second pinion shaft 42 to a steered-side actuator 41 that supplies the rack shaft 32 with a steered force that steers the steered wheels 4. The steered-side actuator 41 includes the following: a steered-side motor 43 as a drive source; and a steered-side speed reducer 44 that transmits rotation of the steered-side motor 43 to the second pinion shaft 42 while reducing the speed of the rotation. The second pinion shaft 42 and the rack shaft 32 form a predetermined crossed axes angle. Second pinion teeth 42a formed in the second pinion shaft 42 mesh with second rack teeth 32b formed in the rack shaft 32, thereby providing a second rack and pinion mechanism 45. The rack shaft 32 is reciprocatively supported near the other axial end by the second rack and pinion mechanism 45.

In the steering system 2, the steered-side actuator 41 drivingly rotates the second pinion shaft 42 in accordance with the steering input from a driver, and the second rack and pinion mechanism 45 converts the rotation of the second pinion shaft 42 to axial movement of the rack shaft 32, thus changing the steered angle of the steered wheels 4. At this time, the steering-side actuator 13 supplies the steering wheel 11 with a steering reaction force that opposes the steering input from a driver.

Next, an electrical structure according to the first embodiment is described. The steering control unit 1 is connected to both the steering-side actuator 13 (the steering-side motor 14) and the steered-side actuator 41 (the steered-side motor 43) to control actuation of the actuators 13 and 41. Although not illustrated in the drawings, the steering control unit 1 includes a central processing unit (CPU) and a memory device. The CPU executes a program stored in the memory device at predetermined calculation intervals, thereby performing various control operations.

The steering control unit 1 is connected to a vehicle speed sensor 51 and a torque sensor 52. The vehicle speed sensor 51 detects a vehicle speed SPD. The torque sensor 52 detects a steering torque Th applied to the steering shaft 12. The torque sensor 52 is mounted closer to the steering wheel 11 than a portion of the steering shaft 12 that is coupled to the steering-side actuator 13 (the steering-side speed reducer 15). The steering control unit 1 is further connected to a steering-side rotation sensor 53 and a steered-side rotation sensor 54. The steering-side rotation sensor 53 detects, as a detection value indicative of the amount of the steering input to the steering input device 3, a rotation angle θs of the steering-side motor 14 as a relative angle in a range of 360 degrees. The steered-side rotation sensor 54 detects, as a detection value indicative of the amount by which the steering operation device 5 steers the steered wheels 4, a rotation angle θt of the steered-side motor 43 as a relative angle. Each of the steering torque Th and the rotation angles θs and θt is detected as a positive value when the steering wheel 11 is turned to a first direction (according to the first embodiment, to the right), and is detected as a negative value when the steering wheel 11 is turned to a second direction (according to the first embodiment, to the left). The steering control unit 1 controls actuation of the steering-side motor 14 and the steered-side motor 43 on the basis of these various state quantities.

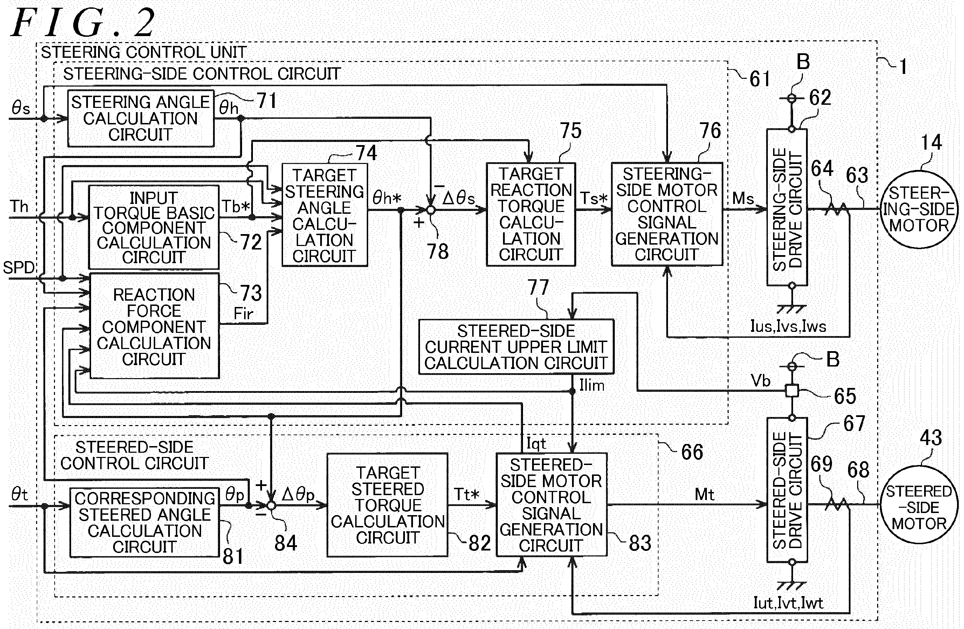

Next, the structure of the steering control unit 1 is described in detail. As illustrated in FIG. 2, the steering control unit 1 includes the following: a steering-side control circuit 61 that outputs a steering-side motor control signal Ms as a control circuit; and a steering-side drive circuit 62 that supplies drive electric power to the steering-side motor 14 on the basis of the steering-side motor control signal Ms. The steering-side control circuit 61 is connected to current sensors 64 that separately detect phase current values Ius, Ivs, and Iws, each flowing through a separate connection line 63 between the steering-side motor 14 and a corresponding phase coil of the steering-side motor 14. In FIG. 2, for the purpose of brevity, the connection lines 63 are collectively illustrated as one connection line 63, and the current sensors 64 are collectively illustrated as one current sensor 64. The steering-side control circuit 61 is further connected to a voltage sensor 65 that detects a supply voltage Vb of the vehicle power supply B.

The steering control unit 1 further includes the following: a steered-side control circuit 66 that outputs a steered-side motor control signal Mt; and a steered-side drive circuit 67 that supplies drive electric power to the steered-side motor 43 on the basis of the steered-side motor control signal Mt. The steered-side control circuit 66 is connected to current sensors 69 that separately detect phase current values Iut, Ivt, and Iwt, each flowing through a separate connection line 68 between the steered-side drive circuit 67 and a corresponding phase coil of the steered-side motor 43. In FIG. 2, for the purpose of brevity, the connection lines 68 are collectively illustrated as one connection line 68, and the current sensors 69 are collectively illustrated as one current sensor 69. According to the first embodiment, each of the steering-side drive circuit 62 and the steered-side drive circuit 67 includes a conventional PWM inverter having switching elements (e.g., FETs). The steering-side motor control signal Ms functions as a gate ON/OFF signal for determining ON/OFF states of the switching elements of the steering-side drive circuit 62. The steered-side motor control signal Mt functions as a gate ON/OFF signal for determining ON/OFF states of the switching elements of the steered-side drive circuit 67.

The steering control unit 1 performs calculation processes in control blocks described below at predetermined calculation intervals, thereby generating the steering-side motor control signal Ms and the steered-side motor control signal Mt. Then, the steering-side motor control signal Ms is output to the steering-side drive circuit 62, and the switching elements in the steering-side drive circuit 62 are switched ON and OFF in accordance with the steering-side motor control signal Ms so that drive electric power is supplied from the vehicle power supply B to the steering-side motor 14. Likewise, the steering-side motor control signal Mt is output to the steered-side drive circuit 67, and the switching elements in the steered-side drive circuit 67 are switched ON and OFF in accordance with the steered-side motor control signal Mt so that drive electric power is supplied from the vehicle power supply B to the steered-side motor 43. Thus, actuation of the steering-side actuator 13 and the steered-side actuator 41 is controlled.

First, the structure of the steering-side control circuit 61 is described. The steering-side control circuit 61 receives the following state quantities: the vehicle speed SPD; the steering torque Th; the rotation angle θs; the phase current values Ius, Ivs, and Iws; the supply voltage Vb of the vehicle power supply B; a corresponding steered angle θp output from the steered-side control circuit 66; and a q-axis current value Iqt as a drive current supplied to the steered-side motor 43. The corresponding steered angle θp and the q-axis current value Iqt are described later. The steering-side control circuit 61 generates and outputs the steering-side motor control signal Ms on the basis of the received state quantities.

Specifically, the steering-side control circuit 61 includes a steering angle calculation circuit 71 that calculates a steering angle θh of the steering wheel 11 on the basis of the rotation angle θs of the steering-side motor 14. The steering-side control circuit 61 further includes the following: an input torque basic component calculation circuit 72 that calculates an input torque basic component Tb* as a force that rotates the steering wheel 11; and a reaction force component calculation circuit 73 that calculates a reaction force component Fir as a force that opposes rotation of the steering wheel 11. The steering-side control circuit 61 further includes a target steering angle calculation circuit 74 that calculates a target steering angle θh* on the basis of the steering torque Th, the vehicle speed SPD, the input torque basic component Tb*, and the reaction force component Fir. The steering-side control circuit 61 further includes the following: a target reaction torque calculation circuit 75 that calculates a target reaction torque Ts* on the basis of the steering angle θh and the target steering angle θh*; and a steering-side motor control signal generation circuit 76 that generates the steering-side motor control signal Ms on the basis of the target reaction torque Ts*. The steering-side control circuit 61 further includes a steered-side current upper limit calculation circuit 77 that calculates an upper limit Ilim of the q-axis current value Iqt supplied to the steered-side motor 43.

The steering angle calculation circuit 71 converts the input rotation angle θs to an absolute angle in a range of more than 360 degrees by, for example, counting the number of rotations of the steering-side motor 14 from a steering neutral position. Then, the steering angle calculation circuit 71 multiplies the rotation angle converted to the absolute angle by a conversion factor Ks based on a speed reduction ratio of the steering-side speed reducer 15, thereby calculating the steering angle θh. The calculated steering angle θh is output to a subtractor 78 and the reaction force component calculation circuit 73.

The input torque basic component calculation circuit 72 receives the steering torque Th. The input torque basic component calculation circuit 72 calculates the input torque basic component (reaction force basic component) Tb* such that the absolute value of the input torque basic component Tb* increases with increasing absolute value of the steering torque Th. The input torque basic component Tb* is input to the target steering angle calculation circuit 74 and the target reaction torque calculation circuit 75.

The target steering angle calculation circuit 74 receives the steering torque Th, the vehicle speed SPD, the input torque basic component Tb*, and the reaction force component Fir calculated by the reaction force component calculation circuit 73 described later. The target steering angle calculation circuit 74 calculates the target steering angle θh* using the following model (steering model) formula (1) that associates an input torque Tin* with the target steering angle θh*: ${Tin}^{∗} = C ⋅ {θh}^{∗} ′ + J ⋅ {θh}^{∗} "$ (1). The input torque Tin* is a value calculated by subtracting the reaction force component Fir from the sum of the input torque basic component Tb* and the steering torque Th.

The model formula (1) represents the relationship between torque of a rotating shaft rotating with rotation of the steering wheel 11 and a rotation angle of the rotating shaft in a system where the steering wheel 11 (the steering input device 3) is mechanically coupled to the steered wheels 4 (the steering operation device 5). In the model formula (1), C represents a viscosity factor that models the friction of the steering system 2, and J represents an inertia factor J that models the inertia of the steering system 2. The viscosity factor C and the inertia factor J are variable in accordance with the vehicle speed SPD. The target steering angle θh* calculated by the model formula (1) is output to the subtractor 78, the steered-side control circuit 66, and the reaction force component calculation circuit 73.

The target reaction torque calculation circuit 75 receives the input torque basic component Tb* and also receives an angle deviation Aθs from the subtractor 78 that calculates the angle deviation Δθs by subtracting the steering angle θh from the target steering angle θh*. Then, the target reaction torque calculation circuit 75 calculates a basic reaction torque on the basis of the angle deviation Aθs and adds the input torque basic component Tb* to the basic reaction torque, thereby calculating the target reaction torque Ts*. The basic reaction torque serves as a base of the steering reaction force that the steering-side motor 14 supplies as a controlled variable to feedback-control the steering angle θh to the target steering angle θh*. Specifically, the target reaction torque calculation circuit 75 calculates the basic reaction torque by summing output values of a proportional element, an integral element, and a derivative element, each element receiving the angle deviation Δθs as an input.

The steering-side motor control signal generation circuit 76 receives the target reaction torque Ts*, the rotation angle θs, and the phase current values Ius, Ivs, and Iws. According to the first embodiment, the steering-side motor control signal generation circuit 76 calculates a target q-axis current value Iqs* in a q-axis of a d/q coordinate system, on the basis of the target reaction torque Ts*. According to the first embodiment, a target d-axis current value Ids* in a d-axis of the d/q coordinate system is set to zero. The steering-side motor control signal generation circuit 76 generates (calculates) the steering-side motor control signal Ms to be output to the steering-side drive circuit 62 by performing current feedback control in the d/q coordinate system. Specifically, the steering-side motor control signal generation circuit 76 maps the phase current values Ius, Ivs, and Iws on the d/q coordinates on the basis of the rotation angle θs, thereby calculating a d-axis current value Ids and a q-axis current value Iqs that are actual current values through the steering-side motor 14 in the d/q coordinate system. Then, on the basis of a deviation between the d-axis current value Ids and the target d-axis current value Ids* and a deviation between the q-axis current value Iqs and the target q-axis current value Iqs*, the steering-side motor control signal generation circuit 76 calculates voltage command values for eliminating the deviations and generates the steering-side motor control signal Ms having a duty ratio based on the voltage command values. The steering-side drive circuit 62 receives the steering-side motor control signal Ms and outputs the drive electric power corresponding to the steering-side motor control signal Ms to the steering-side motor 14, thus controlling actuation of the steering-side motor 14.

The steered-side current upper limit calculation circuit 77 receives the supply voltage Vb. The steered-side current upper limit calculation circuit 77 calculates the upper limit Ilim when the absolute value of the supply voltage Vb decreases to or below a preset voltage threshold Vth. The upper limit Ilim is less than a rated current value that is preset as a drive current value allowed to be supplied to the steered-side motor 43. Specifically, when the absolute value of the supply voltage Vb decreases to or below the voltage threshold Vth, the steered-side current upper limit calculation circuit 77 calculates the upper limit Ilim such that the absolute value of the upper limit Ilim decreases with decreasing absolute value of the supply voltage Vb. The calculated upper limit Ilim is output to the reaction force component calculation circuit 73 and the steered-side control circuit 66.

Next, the steered-side control circuit 66 is described. The steered-side control circuit 66 receives the following state quantities: the rotation angle θt; the target steering angle θh*; the upper limit Ilim; and the phase current values Iut, Ivt, and Iwt through the steered-side motor 43. The steered-side control circuit 66 generates and outputs the steered-side motor control signal Mt on the basis of the received state quantities.

Specifically, the steered-side control circuit 66 includes a corresponding steered angle calculation circuit 81 that calculates the corresponding steered angle θp corresponding to a rotation angle (a pinion angle) of the first pinion shaft 31. The steered-side control circuit 66 further includes the following: a target steered torque calculation circuit 82 that calculates a target steered torque Tt* on the basis of the corresponding steered angle θp and the target steering angle θh*; and a steered-side motor control signal generation circuit 83 that generates the steered-side motor control signal Mt on the basis of the target steered torque Tt*. In the steering system 2 according to the first embodiment, a steer angle ratio that is a ratio between the steering angle θh and the corresponding steered angle θp is set constant, and a target corresponding steered angle is equal to the target steering angle θh*.

The corresponding steered angle calculation circuit 81 converts the input rotation angle θt to an absolute angle in a range of more than 360 degrees by, for example, counting the number of rotations of the steered-side motor 43 from a neutral position where a vehicle moves straight ahead. Then, the corresponding steered angle calculation circuit 81 multiplies the rotation angle converted to the absolute angle by a conversion factor Kt, thereby calculating the corresponding steered angle θp. The conversion factor Kt is based on a speed reduction ratio of the steering-side speed reducer 44, a gear ratio of the first rack and pinion mechanism 34, and a gear ratio of the second rack and pinion mechanism 45. That is, the corresponding steered angle θp corresponds to the steering angle θh of the steering wheel 11 on the assumption that the first pinion shaft 31 is coupled to the steering shaft 12. The calculated corresponding steered angle θp is output to a subtractor 84 and the reaction force component calculation circuit 73. Besides the corresponding steered angle θp, the subtractor 84 receives the target steering angle θh* (the target corresponding steered angle).

The target steered torque calculation circuit 82 receives an angle deviation Δθp from the subtractor 84 that calculates the angle deviation Δθp by subtracting the corresponding steered angle θp from the target steering angle θh* (the target corresponding steered angle). Then, the target steered torque calculation circuit 82 calculates the target steered torque Tt* on the basis of the angle deviation Δθp. The target steered torque Tt* is a controlled variable used to feedback-control the corresponding steered angle θp to the target steering angle θh* and is a target value of the steered force that the steered-side motor 43 supplies. Specifically, the target steered torque calculation circuit 82 calculates the target steered torque Tt* by summing output values of a proportional element, an integral element, and a derivative element, each element receiving the angle deviation Δθp as an input.

The steered-side motor control signal generation circuit 83 receives the target steered torque Tt*, the rotation angle θt, the phase current values Iut, Ivt, and Iwt, and the upper limit Ilim. Then, the steered-side motor control signal generation circuit 83 calculates a target q-axis current value Iqt* in the q-axis of the d/q coordinate system, on the basis of the target steered torque Tt*. According to the first embodiment, the steered-side motor control signal generation circuit 83 compares the absolute value of the target q-axis current value Iqt* with the upper limit Ilim, and determines whether the absolute value of the target q-axis current value Iqt* is greater than the upper limit Ilim. If the absolute value of the target q-axis current value Iqt* is greater than the upper limit Ilim, the steered-side motor control signal generation circuit 83 corrects the absolute value of the target q-axis current value Iqt* to the upper limit Ilim, thereby generating a new target q-axis current value Iqt*. Thus, the steered-side motor control signal generation circuit 83 limits output torque of the steered-side motor 43 to torque corresponding to the upper limit Ilim. In contrast, if the absolute value of the target q-axis current value Iqt* is less than or equal to the upper limit Ilim, the steered-side motor control signal generation circuit 83 does not correct the target q-axis current value Iqt*. According to the first embodiment, a target d-axis current value Idt* in the d-axis of the d/q coordinate system is set to zero.

The steered-side motor control signal generation circuit 83 generates (calculates) the steered-side motor control signal Mt to be output to the steered-side drive circuit 67 by performing current feedback control in the d/q coordinate system. Specifically, the steered-side motor control signal generation circuit 83 maps phase current values Iut, Ivt, and Iwt on the d/q coordinates on the basis of the rotation angle θt, thereby calculating a d-axis current value Idt and the q-axis current value Iqt that are actual current values through the steered-side motor 43 in the d/q coordinate system. Then, on the basis of a deviation between the d-axis current value Idt and the target d-axis current value Idt* and a deviation between the q-axis current value Iqt and the target q-axis current value Iqt*, the steered-side motor control signal generation circuit 83 calculates voltage command values for eliminating the deviations and generates the steered-side motor control signal Mt having a duty ratio based on the voltage command values. The steered-side drive circuit 67 receives the steered-side motor control signal Mt and outputs the drive electric power corresponding to the steered-side motor control signal Mt to the steered-side motor 43, thus controlling actuation of the steered-side motor 43. The q-axis current value Tqt calculated in the process of generating the steered-side motor control signal Mt is output to the reaction force component calculation circuit 73.

Next, the structure of the reaction force component calculation circuit 73 is described. The reaction force component calculation circuit 73 receives the following state quantities: the vehicle speed SPD; the steering angle θh; the corresponding steered angle θp; the upper limit Ilim; the q-axis current value Iqt for the steered-side motor 43; and the target steering angle θh*. The reaction force component calculation circuit 73 calculates the reaction force component Fir on the basis of the received state quantities, and outputs the reaction force component Fir to the target steering angle calculation circuit 74.

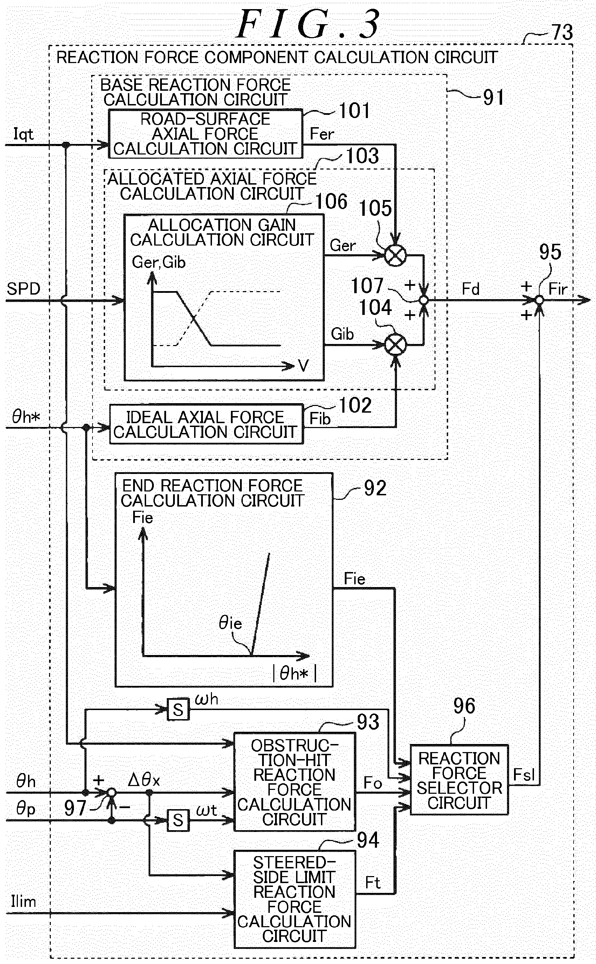

As illustrated in FIG. 3, the reaction force component calculation circuit 73 includes the following: a base reaction force calculation circuit 91; an end reaction force calculation circuit 92; an obstruction-hit reaction force calculation circuit 93 as an additional reaction force calculation circuit; and a steered-side limit reaction force calculation circuit 94 as the additional reaction force calculation circuit. The base reaction force calculation circuit 91 calculates a base reaction force Fd corresponding to an axial force of the rack shaft 32. When the absolute value of the steering angle θh of the steering wheel 11 approaches a steering angle limit, the end reaction force calculation circuit 92 calculates an end reaction force Fie that opposes further turn of the steering wheel 11. When the steered wheels 4 hits an obstruction, such as a curb, the obstruction-hit reaction force calculation circuit 93 calculates an obstruction-hit reaction force Fo as an additional reaction force that opposes further turn of the steering wheel 11. When the q-axis current value Iqt that corresponds to output torque of the steered-side motor 43 is limited, the steered-side limit reaction force calculation circuit 94 calculates a steered-side limit reaction force Ft as an additional reaction force that opposes further turn of the steering wheel 11. The reaction force component calculation circuit 73 adds, to the base reaction force Fd, one of the end reaction force Fie, the obstruction-hit reaction force Fo, and the steered-side limit reaction force Ft that is largest in absolute value, thereby generating and outputting the reaction force component Fir.

Specifically, the base reaction force calculation circuit 91 includes the following: a road-surface axial force calculation circuit 101 that calculates a road-surface axial force Fer; and an ideal axial force calculation circuit 102 that calculates an ideal axial force Fib. The road-surface axial force Fer and the ideal axial force Fib are calculated in dimensions of torque (N • m). The reaction force component calculation circuit 73 further includes an allocated axial force calculation circuit 103 that calculates an allocated axial force as the base reaction force Fd to which the ideal axial force Fib and the road-surface axial force Fer are allocated in a predetermined ratio so that the base reaction force Fd reflects an axial force applied to the steered wheels 4 from a road surface (i.e., reflects road surface information transmitted to the steered wheels 4 from the road surface).

The ideal axial force calculation circuit 102 receives the target steering angle θh* (the target corresponding steered angle). The ideal axial force calculation circuit 102 calculates the ideal axial force Fib on the basis of the target steering angle θh*. The ideal axial force Fib is an ideal value of an axial force exerted on the steered wheels 4 (i.e., an ideal value of a transmission force transmitted to the steered wheels 4) and does not reflect the road surface information. Specifically, the ideal axial force calculation circuit 102 calculates the ideal axial force Fib such that the absolute value of the ideal axial force Fib increases with increasing absolute value of the target steering angle θh*. The calculated ideal axial force Fib is output to a multiplier 104.

The road-surface axial force calculation circuit 101 receives the q-axis current value Iqt for the steered-side motor 43. The road-surface axial force calculation circuit 101 calculates the road-surface axial force Fer on the basis of the q-axis current value Iqt. The road-surface axial force Fer is an estimated value of the axial force exerted on the steered wheels 4 (i.e., an estimated value of the transmission force transmitted to the steered wheels 4) and reflects the road surface information. Specifically, the road-surface axial force calculation circuit 101 calculates the road-surface axial force Fer such that the absolute value of the road-surface axial force Fer increases with increasing absolute value of the q-axis current value Iqt to balance torque applied to the rack shaft 32 by the steered-side motor 43 and torque caused by the force applied to the steered wheels 4 from the road surface. The calculated road-surface axial force Fer is output to a multiplier 105.

The allocated axial force calculation circuit 103 receives the vehicle speed SPD, the road-surface axial force Fer, and the ideal axial force Fib. The allocated axial force calculation circuit 103 includes an allocation gain calculation circuit 106 that calculates allocation gains Gib and Ger on the basis of the vehicle speed SPD. The allocation gain Gib represents a proportion of the ideal axial force Fib to be allocated. The allocation gain Ger represents a proportion of the road-surface axial force Fer to be allocated. According to the first embodiment, the allocation gain calculation circuit 106 includes a map defining the relationship of the vehicle speed SPD to the allocation gains Gib and Ger and calculates the allocation gains Gib and Ger corresponding to the vehicle speed SPD by referring to the map. The allocation gain Gib decreases with an increase in the vehicle speed SPD, whereas the allocation gain Ger increases with an increase in the vehicle speed SPD. According to the first embodiment, the allocation gains Gib and Ger are calculated such that the sum of the allocation gains Gib and Ger is one. The calculated allocation gains Gib and Ger are respectively output to the multipliers 104 and 105.

In the allocated axial force calculation circuit 103, the multiplier 104 multiplies the ideal axial force Fib by the allocation gain Gib, the multiplier 105 multiples the road-surface axial force Fer by the allocation gain Ger, and an adder 107 adds together the outputs of the multipliers 104 and 105, thereby calculating the base reaction force Fd (the allocated axial force). The calculated base reaction force Fd (the allocated axial force) is output to an adder 95.

The end reaction force calculation circuit 92 receives the target steering angle θh* (the target corresponding steered angle). As illustrated in FIG. 3, the end reaction force calculation circuit 92 includes a map and calculates the end reaction force Fie on the basis of the target steering angle θh* by referring to the map. This map has a threshold angle θie. When the absolute value of the target steering angle θh* is less than or equal to the threshold angle θie, the end reaction force Fie is calculated as zero. When the absolute value of the target steering angle θh* exceeds the threshold angle θie, the end reaction force Fie is calculated to have an absolute value greater than zero. The calculated end reaction force Fie is output to a reaction force selector circuit 96. More specifically, when the absolute value of the target steering angle θh* reaches a predetermined value that is somewhat greater than the threshold angle θie, the end reaction force Fie is calculated to have an absolute value that is so large that further turn of the steering wheel 11 is not allowed with man power alone.

According to the first embodiment, in relation to the mechanical structure of the steering operation device 5, an imaginary rack end position is set closer to a neutral position than a mechanical rack end position at which the rack end 35 comes into abutment with the rack housing 33 to limit axial movement of the rack shaft 32. The threshold angle θie is set to a value of the corresponding steered angle θp at an imaginary rack end adjacent position that is set closer to the neutral position than the imaginary rack end position by a predetermined angle. Further, in relation to the mechanical structure of the steering input device 3 based on the assumption that the steering input device 3 is coupled to the steering operation device 5, the threshold angle θie (i.e., the corresponding steered angle θp at the imaginary rack end adjacent position) is set closer to the neutral position than the steering angle θh of the steering wheel 11 being turned to a steering end position up to which the spiral cable device 21 allows the steering wheel 11 to be turned. That is, in the steering system 2 according to the first embodiment, the imaginary rack end adjacent position is set as a steering angle limit position for the steering operation device 5 while the steering end position is set as the steering angle limit position for the steering input device 3. Thus, assuming that the first pinion shaft 31 is coupled to the steering shaft 12, the steering operation device 5 (the steered wheels 4) reaches the steering angle limit position before the steering input device 3. The threshold angle θie corresponds to a steering angle threshold set according to the steering system 2.

The obstruction-hit reaction force calculation circuit 93 receives the following state quantities: the q-axis current value Iqt for the steered-side motor 43; an angle deviation Δθx output from a subtractor 97 that subtracts the corresponding steered angle θp from the steering angle θh; and a steered velocity ωt calculated by differentiating the corresponding steered angle θp. According to the first embodiment, the obstruction-hit reaction force calculation circuit 93 calculates an obstruction-hit gain Go on the basis of the received state quantities and calculates the obstruction-hit reaction force Fo on the basis of the obstruction-hit gain Go. The obstruction-hit gain Go indicates the degree of similarity to a situation where the obstruction-hit reaction force Fo is required to be supplied.

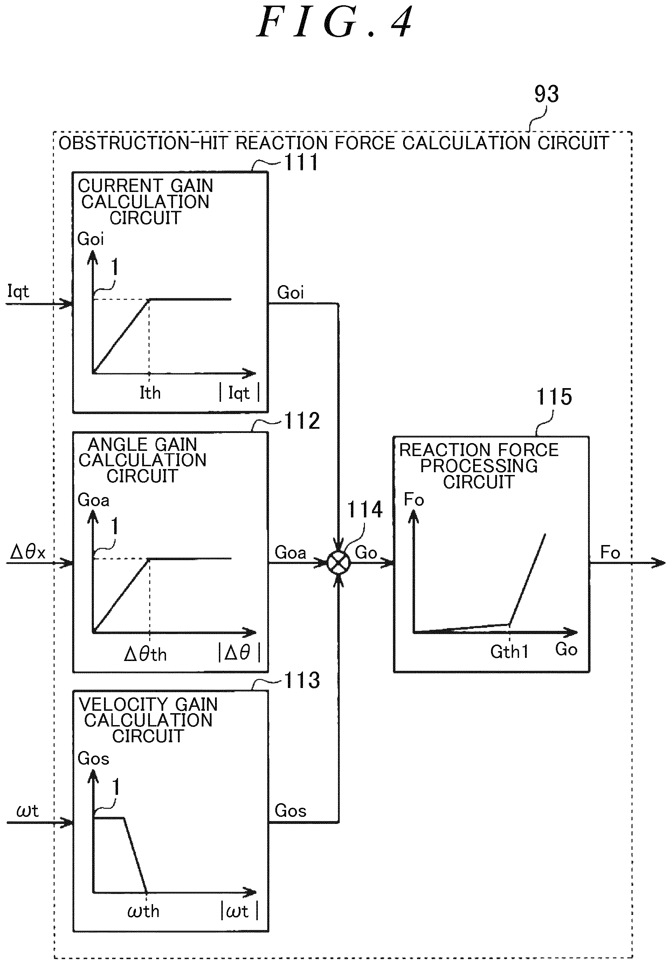

Specifically, as illustrated in FIG. 4, the obstruction-hit reaction force calculation circuit 93 includes the following: a current gain calculation circuit 111 that calculates a current gain Goi based on the q-axis current value Iqt; an angle gain calculation circuit 112 that calculates an angle gain Goa based on the angle deviation Δθx; and a velocity gain calculation circuit 113 that calculates a velocity gain Gos based on the steered velocity ωt.

The current gain calculation circuit 111 receives the q-axis current value Iqt. The current gain calculation circuit 111 includes a map defining the relationship of the absolute value of the q-axis current value Iqt to the current gain Goi and calculates the current gain Goi corresponding to the q-axis current value Iqt by referring to the map. According to this map, when the absolute value of the q-axis current value Iqt is zero, the current gain Goi is zero, and when the absolute value of the q-axis current value Iqt is not zero, the current gain Goi increases proportionally with an increase in the absolute value of the q-axis current value Iqt. Then, when the absolute value of the q-axis current value Iqt exceeds a current threshold Ith, the current gain Goi is set to one. Thus, according to the first embodiment, one of the conditions for determining that there is similarity to a situation where the steered wheels 4 hit an obstruction is that an attempt to steer the steered wheels 4 is being made. Specifically, it is determined that as the absolute value of the q-axis current value Iqt becomes greater, there is a higher degree of similarity to the situation where the steered wheels 4 hit an obstruction. The current threshold Ith is predetermined by experiment or any other suitable method such that the q-axis current value Iqt exceeding the current threshold Ith allows the steered-side motor 43 to steer the steered wheels 4 on a normal road surface. The calculated current gain Goi is input to a multiplier 114.

The angle gain calculation circuit 112 receives the angle deviation Δθx. The angle gain calculation circuit 112 includes a map defining the relationship of the absolute value of the angle deviation Δθx to the angle gain Goa and calculates the angle gain Goa corresponding to the angle deviation Δθx by referring to the map. According to this map, when the absolute value of the angle deviation Δθx is zero, the angle gain Goa is zero, and when the absolute value of the angle deviation Δθx is not zero, the angle gain Goa increases proportionally with an increase in the absolute value of the angle deviation Δθx. Then, when the absolute value of the angle deviation Δθx exceeds an angle deviation threshold Δθth, the angle gain Goa is set to one. Thus, according to the first embodiment, one of the conditions for determining that there is similarity to the situation where the steered wheels 4 hit an obstruction is that there is a large deviation between the steering angle θh and the corresponding steered angle θp. Specifically, as the absolute value of the angle deviation Δθx becomes greater, it is determined that there is a higher degree of similarity to the situation where the steered wheels 4 hit an obstruction. The angle deviation threshold Δθth is predetermined by experiment or any other suitable method such that the absolute value of the angle deviation Δθx exceeding the angle deviation threshold Δθth is considered an indication that there is a deviation between the steering angle θh and the corresponding steered angle θp even with disturbance factors, such as sensor noises, taken into account. The calculated angle gain Goa is input to the multiplier 114.

The velocity gain calculation circuit 113 receives the steered velocity ωt. The velocity gain calculation circuit 113 includes a map defining the relationship of the absolute value of the steered velocity ωt to the velocity gain Gos and calculates the velocity gain Gos corresponding to the steered velocity ωt by referring to the map. According to this map, when the absolute value of the steered velocity ωt is zero, the velocity gain Gos is one, and when the absolute value of the steered velocity ωt is not zero, the velocity gain Gos decreases proportionally with an increase in the absolute value of the steered velocity ωt. Then, when the absolute value of the steered velocity ωt exceeds a velocity threshold ωth, the velocity gain Gos is set to one. Thus, according to the first embodiment, one of the conditions for determining that there is similarity to the situation where the steered wheels 4 hit an obstruction is that the steered velocity ωt is low. Specifically, it is determined that as the absolute value of the steered velocity ωt becomes smaller, there is a higher degree of similarity to the situation where the steered wheels 4 hit an obstruction. The velocity threshold ωth is predetermined by experiment or any other suitable method such that the absolute value of the steered velocity ωt exceeding the velocity threshold ωth is considered an indication that the steered wheels 4 are being steered even with disturbance factors, such as sensor noises, taken into account. The calculated velocity gain Gos is input to the multiplier 114.

In the obstruction-hit reaction force calculation circuit 93, the multiplier 114 multiples the current gain Goi, the angle gain Goa, and the velocity gain Gos together, thereby calculating the obstruction-hit gain Go. The calculated obstruction-hit gain Go is output to a reaction force processing circuit 115.

The reaction force processing circuit 115 includes a map defining the relationship of the obstruction-hit gain Go to the obstruction-hit reaction force Fo and calculates the obstruction-hit reaction force Fo corresponding to the obstruction-hit gain Go by referring to the map. According to this map, when the obstruction-hit gain Go is zero, the obstruction-hit reaction force Fo is zero, and when the obstruction-hit gain Go is not zero, the obstruction-hit reaction force Fo gradually increases proportionally with an increase in the obstruction-hit gain Go. Then, when the obstruction-hit gain Go exceeds a gain threshold Gth1, the obstruction-hit reaction force Fo sharply increases proportionally with an increase in the obstruction-hit gain Go. A gain threshold Gth1 in this map has such a magnitude that when the obstruction-hit gain Go reaches the gain threshold Gth1, it is safe to determine that the steered wheels 4 hit an obstruction. The magnitude of the gain threshold Gth1 is predetermined by experiment or any other suitable method. Further, when the obstruction-hit gain Go reaches a predetermined value that is somewhat greater than the gain threshold Gth1, the obstruction-hit reaction force Fo is calculated to have an absolute value that is so large that further turn of the steering wheel 11 is not allowed with man power alone. The calculated obstruction-hit reaction force Fo is output to the reaction force selector circuit 96 (refer to FIG. 3).

As illustrated in FIG. 3, the steered-side limit reaction force calculation circuit 94 receives the following state quantities: the angle deviation Δθx; and the upper limit Ilim. According to the first embodiment, the steered-side limit reaction force calculation circuit 94 calculates a steered-side limit gain Gt on the basis of the received state quantities and calculates the steered-side limit reaction force Ft on the basis of the steered-side limit gain Gt. The steered-side limit gain Gt indicates the degree of similarity to a situation where the steered-side limit reaction force Ft is required to be supplied.

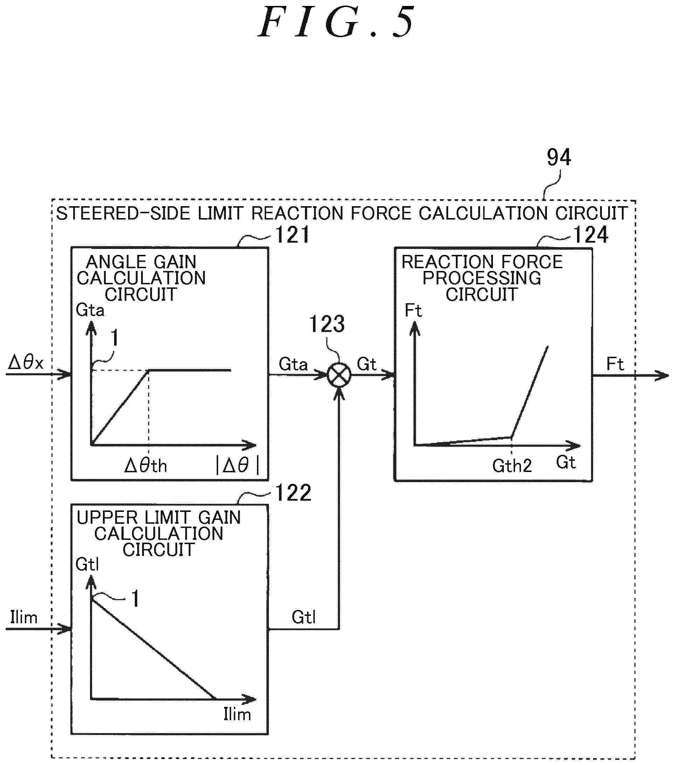

Specifically, as illustrated in FIG. 5, the steered-side limit reaction force calculation circuit 94 includes the following: an angle gain calculation circuit 121 that calculates an angle gain Gta based on the angle deviation Δθx; and an upper limit gain calculation circuit 122 that calculates an upper limit gain Gtl based on the upper limit Ilim.

The angle gain calculation circuit 121 receives the angle deviation Δθx. The angle gain calculation circuit 121 includes a map defining the relationship of the absolute value of the angle deviation Δθx to the angle gain Gta and calculates the angle gain Gta corresponding to the angle deviation Δθx by referring to the map. The map of the angle gain calculation circuit 121 is set in the same manner as that of the angle gain calculation circuit 112 of the obstruction-hit reaction force calculation circuit 93. Alternatively, the map of the angle gain calculation circuit 121 may be set in a manner different from that of the angle gain calculation circuit 112. Thus, according to the first embodiment, one of the conditions for determining that there is similarity to a situation where output torque of the steered-side motor 43 is limited is that there is a large deviation between the steering angle θh and the corresponding steered angle θp. Specifically, it is determined that as the absolute value of the angle deviation Δθx becomes greater, there is a higher degree of similarity to the situation where output torque of the steered-side motor 43 is limited. The calculated angle gain Gta is input to a multiplier 123.

The upper limit gain calculation circuit 122 receives the upper limit Ilim. The upper limit gain calculation circuit 122 includes a map defining the relationship of the absolute value of the upper limit Ilim to the upper limit gain Gtl and calculates the upper limit gain Gtl corresponding to the upper limit Ilim by referring to the map. According to this map, when the upper limit Ilim is zero, the upper limit gain Gtl is one, and when the upper limit Ilim is not zero, the upper limit gain Gtl decreases proportionally with an increase in the upper limit Ilim. Thus, according to the first embodiment, one of the conditions for determining that there is similarity to the situation where output torque of the steered-side motor 43 is limited is that the upper limit Ilim is small. Specifically, it is determined that as the upper limit Ilim becomes smaller, there is a higher degree of similarity to the situation where output torque of the steered-side motor 43 is limited. The calculated upper limit gain Gtl is input to the multiplier 123.

In the steered-side limit reaction force calculation circuit 94, the multiplier 123 multiplies the angle gain Gta and the upper limit gain Gtl together, thereby calculating the steered-side limit gain Gt. The calculated steered-side limit gain Gt is output to a reaction force processing circuit 124.

The reaction force processing circuit 124 includes a map defining the relationship of the steered-side limit gain Gt to the steered-side limit reaction force Ft and calculates the steered-side limit reaction force Ft corresponding to the steered-side limit gain Gt by referring to the map. The map of the reaction force processing circuit 124 is set in the same manner as that of the reaction force processing circuit 115 of the obstruction-hit reaction force calculation circuit 93. Alternatively, the map of the reaction force processing circuit 124 may be set in a manner different from that of the reaction force processing circuit 115. A gain threshold Gth2 in this map has such a magnitude that when the steered-side limit gain Gt reaches the gain threshold Gth2, it is safe to determine that output torque of the steered-side motor 43 is limited. The magnitude of the gain threshold Gth2 is predetermined by experiment or any other suitable method. Further, when the steered-side limit gain Gt reaches a predetermined value that is somewhat greater than the gain threshold Gth2, the steered-side limit reaction force Ft is calculated to have an absolute value that is so large that further turn of the steering wheel 11 is not allowed with man power alone. The calculated steered-side limit reaction force Ft is output to the reaction force selector circuit 96 (refer to FIG. 3).

As illustrated in FIG. 3, the reaction force selector circuit 96 receives the end reaction force Fie, the obstruction-hit reaction force Fo, the steered-side limit reaction force Ft, and a steering velocity ωh that is calculated by differentiating the steering angle θh. The reaction force selector circuit 96 selects one reaction force with the greatest absolute value from the end reaction force Fie, the obstruction-hit reaction force Fo, and the steered-side limit reaction force Ft, and makes the sign (direction) of the selected reaction force equal to the sign (direction) of the steering velocity ωh, thereby calculating a selected reaction force Fsl. The selected reaction force Fsl is output to the adder 95. In the reaction force component calculation circuit 73, the adder 95 adds the selected reaction force Fsl to the base reaction force Fd, thereby calculating the reaction force component Fir. The reaction force component Fir is output to the target steering angle calculation circuit 74 (refer to FIG. 2).

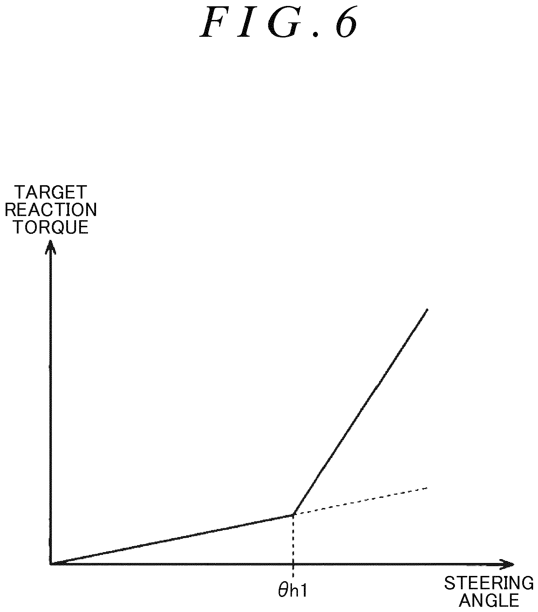

The features and advantages of the first embodiment are described below. (1) For example, it is assumed that the ideal axial force Fib is dominant over the road-surface axial force Fer in the base reaction force Fd (the allocated axial force), that the steering wheel 11 is turned while the vehicle moves substantially straight ahead, and that the steered wheels 4 hit an obstruction, such as a curb, when the steering angle θh reaches a certain angle θh1 that is closer to the neutral position than the angle deviation threshold Δθth. In this case, if the steering-side control circuit 61 calculates the target reaction torque Ts* without taking into account either the obstruction-hit reaction force Fo or the steered-side limit reaction force Ft, the target reaction torque Ts* gradually increases with an increase in the steering angle θh as illustrated in FIG. 6. As indicated by a dashed line in FIG. 6, after the steering angle θh exceeds the certain angle θh1, the target reaction torque Ts* increases at substantially the same rate. As a result, it is hard for a driver to notice that the steered wheels 4 hit an obstruction.

In contrast, according to the first embodiment, since the target reaction torque Ts* is calculated by taking into account both the obstruction-hit reaction force Fo and the steered-side limit reaction force Ft, the target reaction torque Ts* sharply increases after the steering angle θh exceeds the certain angle θh1, as indicated by a continuous line in FIG. 6. This makes it easy for a driver to notice that the steered wheels 4 hit an obstruction. Taking into account the obstruction-hit reaction force Fo and the steered-side limit reaction force Ft in addition to the end reaction force Fie makes it possible to inform a driver of situations other than a situation where the steering angle θh is close to the angle deviation threshold Δθth. Further, the reaction force selector circuit 96 selects one reaction force with the greatest absolute value from the end reaction force Fie, the obstruction-hit reaction force Fo, and the steered-side limit reaction force Ft, and the steering-side control circuit 61 calculates the target reaction torque Ts* by taking into account the selected reaction force. This feature reduces the likelihood of the steering reaction force becoming excessively large.
(2) It is assumed here that the obstruction-hit reaction force Fo is calculated, for example, as follows: a determination is made whether a situation where the obstruction-hit reaction force Fo is required to be supplied occurs; and if the determination is made that the situation occurs, the obstruction-hit reaction force Fo is set to a value greater than zero; whereas if the determination is not made that the situation occurs, the obstruction-hit reaction force Fo is set to zero. According to this assumed approach, the value of the obstruction-hit reaction force Fo changes sharply before and after the determination is made that the situation occurs. If the obstruction-hit reaction force Fo based on such alternative determination is selected by the reaction force selector circuit 96, the steering reaction force may change sharply, so that a driver may feel a sense of discomfort. In contrast, according to the first embodiment, the obstruction-hit reaction force calculation circuit 93 calculates the obstruction-hit reaction force Fo on the basis of the obstruction-hit gain Go, and the steered-side limit reaction force calculation circuit 94 calculates the steered-side limit reaction force Ft on the basis of the steered-side limit gain Gt. This feature reduces the likelihood of the obstruction-hit reaction force Fo and the steered-side limit reaction force Ft suddenly changing, thus providing good steering feel.
(3) The steering-side control circuit 61 includes the obstruction-hit reaction force calculation circuit 93 that calculates the obstruction-hit reaction force Fo in a situation where the steered wheels 4 hit an obstruction. Thus, for example, if a situation occurs where the steered wheels 4 hit an obstruction, such as a curb, with the steered angle corresponding to when the vehicle moves substantially straight forward, a driver can be informed of the situation.
(4) The steering-side control circuit 61 includes the steered-side limit reaction force calculation circuit 94 that calculates the steered-side limit reaction force Ft in a situation where output torque of the steered-side motor 43 is limited. Thus, for example, when a situation occurs where output torque of the steered-side motor 43 is limited because the vehicle power supply B is short of electric power, a driver can be informed of the situation.

Next, a steering control unit according to a second embodiment of the invention is described with reference to the drawings. For the sake of brevity, elements common between the first and second embodiments are denoted by the same reference symbols and are not described again.

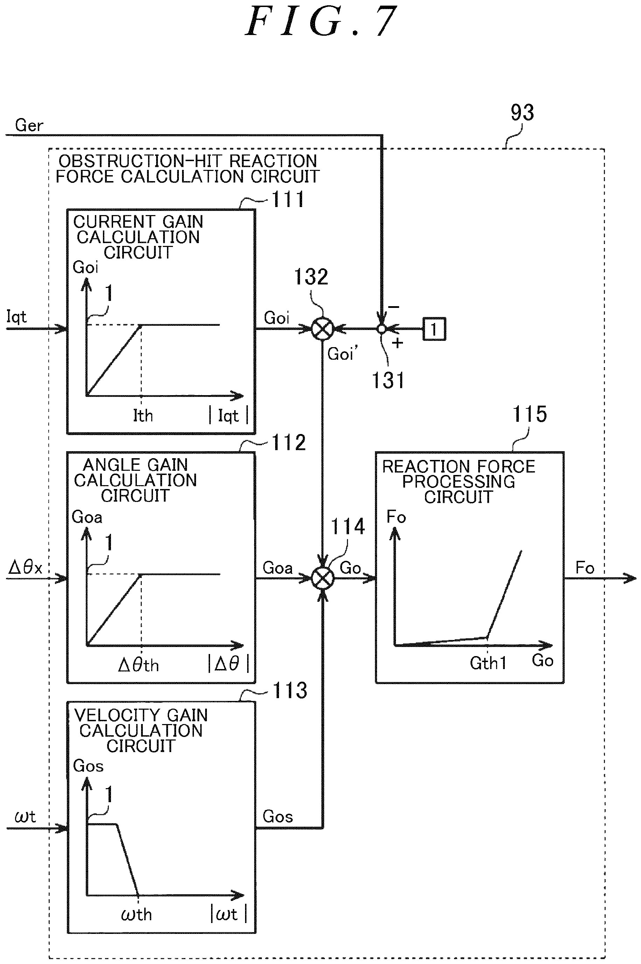

As illustrated in FIG. 7, according to the second embodiment, an obstruction-hit reaction force calculation circuit 93 calculates the obstruction-hit gain Go on the basis of the current gain Goi multiplied by a value that is calculated by subtracting, from a predetermined value, the allocation gain Ger that indicates the proportion of the road-surface axial force Fer to be allocated to the base reaction force Fd (the allocated axial force). According to the second embodiment, the predetermined value is a constant value of one, i.e., equal to the sum of the allocation gains Gib and Ger. Thus, when the allocation gain Ger for the road-surface axial force Fer exceeds the allocation gain Gib for the ideal axial force Fib, a value calculated by subtracting the allocation gain Ger from the predetermined value becomes smaller than the allocation gain Ger.

Specifically, the allocation gain Ger calculated by the allocation gain calculation circuit 106 is input to a subtractor 131 in the obstruction-hit reaction force calculation circuit 93. In addition to the allocation gain Ger, a constant value of one is always input to the subtractor 131. The subtractor 131 outputs, to a multiplier 132, a value that is calculated by subtracting the allocation gain Ger from the constant value of one. In addition to the output value of the subtractor 131 (i.e., 1 - Ger), a current gain Goi that is calculated by a current gain calculation circuit 111 in the same manner as in the first embodiment is input to the multiplier 132. In the obstruction-hit reaction force calculation circuit 93, the multiplier 132 multiplies the output value of the subtractor 131 by the current gain Goi, thereby calculating and outputting a current gain Goi' to a multiplier 114.

In addition to the current gain Goi', an angle gain Goa and a velocity gain Gos that are calculated in the same manner as in the first embodiment are input to the multiplier 114. In the obstruction-hit reaction force calculation circuit 93, the multiplier 114 multiplies the current gain Goi', the angle gain Goa, and the velocity gain Gos together, thereby calculating an obstruction-hit gain Go, and an obstruction-hit reaction force Fo is calculated on the basis of the obstruction-hit gain Go in the same manner as in the first embodiment.

The advantages of the second embodiment are described below. The second embodiment has the following advantage in addition to the advantages (1) to (4) described in the first embodiment. (5) The road-surface axial force Fer reflects a force exerted on the steered wheels 4 by a road surface and basically balances the torque of the steered-side motor 43. Thus, the q-axis current value Iqt supplied to the steered-side motor 43 increases with an increase in the road-surface axial force Fer. When the obstruction-hit reaction force Fo is calculated on the basis of the current gain Goi corresponding to the q-axis current value Iqt, the obstruction-hit reaction force Fo increases with an increase in the q-axis current value Iqt. Thus, the obstruction-hit reaction force Fo based on the current gain Goi increases with an increase in the road-surface axial force Fer. In this case, when the proportion of the road-surface axial force Fer to be allocated to the base reaction force Fd (the allocated axial force) increases, the target reaction torque Ts* may become excessively large due to addition of the increased obstruction-hit reaction force Fo.

In this regard, according to the second embodiment, the obstruction-hit reaction force Fo is calculated on the basis of the current gain Goi'. As described above, the current gain Goi' is calculated by multiplying the current gain Goi used as the base for calculation of the obstruction-hit reaction force Fo by a value that is calculated by subtracting the allocation gain Ger from the constant value of one as the predetermined value (i.e., by a value that becomes smaller than the allocation gain Ger for the road-surface axial force Fer when the allocation gain Ger increases). Therefore, even when the proportion of the road-surface axial force Fer in the base reaction force Fd increases, the obstruction-hit reaction force Fo is less likely to have a large value, and the target reaction torque Ts* is less likely to become excessively large.

The embodiments described above may be modified in various ways as described below. Some example modifications are described below. The embodiments and modifications may be combined in various ways as long as they do not technically contradict with each other. According to the second embodiment, the current gain Goi' is calculated by multiplying the current gain Goi by a value that is calculated by subtracting the allocation gain Ger from the constant value of one as the predetermined value so that the current gain Goi' becomes smaller than the current gain Goi. The predetermined value is not limited to one and may be any suitable value that satisfies the following condition: when the allocation gain Ger for the road-surface axial force Fer exceeds the allocation gain Gib for the ideal axial force Fib, a value that is calculated by subtracting the allocation gain Ger from the predetermined value becomes smaller than the allocation gain Ger.

In addition to the obstruction-hit reaction force calculation circuit 93 and the steered-side limit reaction force calculation circuit 94, the reaction force component calculation circuit 73 may include another additional reaction force calculation circuit that calculates an additional reaction force used to inform a driver of another situation.

In the embodiments, the reaction force component calculation circuit 73 only needs to include at least one additional reaction force calculation circuit. That is, the reaction force component calculation circuit 73 may include neither the obstruction-hit reaction force calculation circuit 93 nor the steered-side limit reaction force calculation circuit 94, when the reaction force component calculation circuit 73 includes another additional reaction force calculation circuit as described above.

According to the embodiments, the obstruction-hit reaction force calculation circuit 93 calculates the obstruction-hit reaction force Fo on the basis of the obstruction-hit gain Go. Alternatively, the obstruction-hit reaction force calculation circuit 93 may determine whether or not the obstruction-hit reaction force Fo is required to be supplied and calculate the obstruction-hit reaction force Fo in accordance with the determination result. Likewise, the steered-side limit reaction force calculation circuit 94 may determine whether or not the steered-side limit reaction force Ft is required to be supplied and calculate the steered-side limit reaction force Ft in accordance with the determination result.

Although the embodiments illustrate that the road-surface axial force Fer is calculated on the basis of the q-axis current value Iqt, the road-surface axial force Fer may be calculated by any other suitable method, such as on the basis of a change in a yaw rate γ or the vehicle speed SPD. Alternatively, for example, the rack shaft 32 may be provided with a pressure sensor for detecting an axial force, and the detected axial force may be used as the road-surface axial force Fer.

According to the embodiments, the ideal axial force Fib is calculated on the basis of the target steering angle θh* (the target corresponding steered angle). Alternatively, the ideal axial force Fib may be calculated by any other suitable method, such as on the basis of the steering angle θh. For example, any other suitable parameter, such as the steering torque Th or the vehicle speed SPD, may be used to calculate the ideal axial force Fib.

In the embodiments, the allocated axial force calculation circuit 103 may use any other suitable parameter, in addition to or instead of the vehicle speed SPD, to calculate the allocation gains Gib and Ger. For example, in the case of a vehicle that has selectable drive modes with different control patterns of an engine mounted to the vehicle, the drive modes may be used as parameters to set the allocation gains Gib and Ger. In this case, the allocated axial force calculation circuit 103 may include different maps for different drive modes, each map having different relationships of the allocation gains Gib and Ger to the vehicle speed SPD, and the allocated axial force calculation circuit 103 may calculate the allocation gains Gib and Ger by referring to the maps.

According to the embodiments, the target steering angle calculation circuit 74 sets the target steering angle θh* on the basis of the steering torque Th, the input torque basic component Tb*, the reaction force component Fir, and the vehicle speed SPD. Alternatively, the target steering angle θh* may be set by any other suitable method that uses at least the steering torque Th, the input torque basic component Tb*, and the reaction force component Fir. Therefore, the target steering angle θh* may be set without using the vehicle speed SPD, for example.

The model formula that the target steering angle calculation circuit 74 uses to calculate the target steering angle θh* may further have a so-called spring term with a spring coefficient K that is determined according to the specifications of suspension, wheel alignment, etc.

According to the embodiments, the target reaction torque calculation circuit 75 calculates the target reaction torque Ts* by adding the input torque basic component Tb* to the basic reaction torque. Alternatively, the basic reaction torque may be calculated as the target reaction torque Ts* without the input torque basic component Tb* being added to it.

A bush or any other suitable member may be used, instead of the first rack and pinion mechanism 34, to support the rack shaft 32. The steered-side actuator 41 may be structured such that the steered-side motor 43 is disposed on the same axis with the rack shaft 32, or such that the steered-side motor 43 is disposed parallel to the rack shaft 32.

The embodiments illustrate that the steering system 2 to be controlled by the steering control unit 1 is a linkless steer-by-wire system that mechanically separates the steering input device 3 from the steering operation device 5. Alternatively, the steering system 2 may be a steer-by-wire steering system that selectively mechanically couples and decouples the steering input device 3 to and from the steering operation device 5 via a clutch.

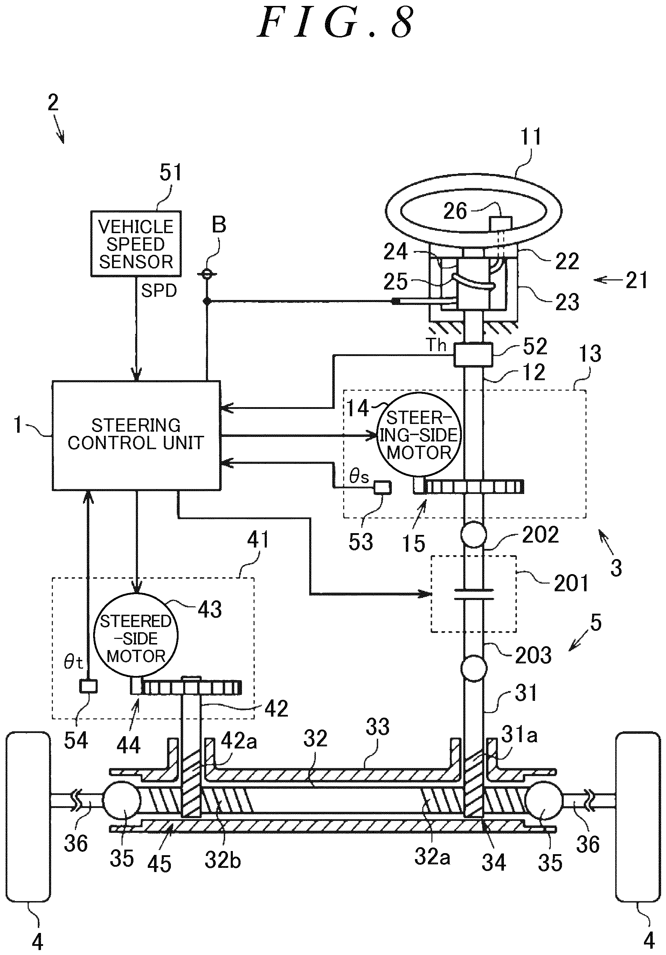

For example, as illustrated in FIG. 8, a clutch 201 may be provided between the steering input device 3 and the steering operation device 5. The clutch 201 is coupled to the steering shaft 12 via an input intermediate shaft 202 fixed to an input element of the clutch 201 and is coupled to the first pinion shaft 31 via an output intermediate shaft 203 fixed to an output element of the clutch 201. When the clutch 201 is brought into a disengaged state in response to a control signal from the steering control unit 1, the steering system 2 enters a steer-by-wire mode. When the clutch 201 is brought into an engaged state in response to the control signal from the steering control unit 1, the steering system 2 enters an electric power steering mode.

## Claims

1. A steering control unit for controlling a steering system (2), the steering system having a first structure or a second structure, the first structure being such that a steering input device (3) that receives a steering input is mechanically separated from a steering operation device (5) that steers a steered wheel (4) in accordance with the steering input, the second structure being such that the steering input device (3) is selectively mechanically coupled and decoupled to and from the steering operation device (5), the steering control unit comprising:
a control circuit (61) that controls actuation of a steering-side motor (14) that supplies the steering input device (3) with a steering reaction force that opposes the steering input; wherein
the control circuit (61) includes an end reaction force calculation circuit (92), **characterized in that**
the control circuit includes at least one additional reaction force calculation circuit (93), and a reaction force selector circuit (96), wherein
when a steering angle (θh) of a steering wheel coupled to the steering input device (3) exceeds a steering angle threshold (θie) that is set according to the steering system (2), the end reaction force calculation circuit (92) calculates an end reaction force (Fie) that increases the steering reaction force on a basis of a first condition that indicates an increase in absolute value of the steering angle (θh),
the at least one additional reaction force calculation circuit (93) calculates at least one additional reaction force (Fo) that increases the steering reaction force on a basis of a second condition different from the first condition,
the reaction force selector circuit (96) selects one reaction force with a greatest absolute value from the end reaction force (Fie) and the at least one additional reaction force (Fo), and
the control circuit (61) calculates target reaction torque (Ts*) as a target value for the steering reaction force by taking into account the reaction force selected by the reaction force selector circuit (96).

2. The steering control unit according to claim 1, wherein
the at least one additional reaction force calculation circuit (93) calculates the at least one additional reaction force (Fo) on a basis of a gain (Go) that represents a degree of similarity to a situation where the at least one additional reaction force (Fo) is required to be supplied.

3. The steering control unit according to claim 1 or 2, wherein
the control circuit (61) includes an obstruction-hit reaction force calculation circuit (93) as the at least one additional reaction force calculation circuit (93), and
when the steered wheel (4) hits an obstruction, the obstruction-hit reaction force calculation circuit (93) calculates an obstruction-hit reaction force (Fo) as the at least one additional reaction force (Fo).

4. The steering control unit according to claim 3, wherein
the control circuit (61) further includes an ideal axial force calculation circuit (102), a road-surface axial force calculation circuit (101), and an allocated axial force calculation circuit (103),
the ideal axial force calculation circuit calculates an ideal axial force (Fib) that is based on a first value related to a rotation angle (θh*) of a rotating shaft, the rotation angle being convertible to the steered angle of the steered wheel (4),
the road-surface axial force calculation circuit (101) calculates a road-surface axial force (Fer) that is based on information about a road surface,
the allocated axial force calculation circuit calculates an allocated axial force (Fd) to which the ideal axial force (Fib) and the road-surface axial force (Fer) are allocated in a predetermined allocation ratio,
the control circuit (61) calculates the target reaction torque (Ts*) by taking into account a sum of the reaction force (Fsl) selected by the reaction force selector circuit (96) and the allocated axial force (Fd),
the obstruction-hit reaction force calculation circuit (93) calculates an obstruction-hit gain (Go) on a basis of a product of a current gain (Goi) and a second value, and calculates the obstruction-hit reaction force (Fo) on a basis of the obstruction-hit gain,
the current gain corresponds to a third value related to a drive current (Iqt) supplied to a steered-side motor (43) that generates a steered force that steers the steered wheel,
the second value is calculated by subtracting a predetermined value from a proportion (Ger) of the road-surface axial force (Fer) to be allocated to the allocated axial force (Fd), and
the predetermined value is set such that when the proportion (Ger) of the road-surface axial force (Fer) to be allocated to the allocated axial force exceeds a proportion (Gib) of the ideal axial force (Fib) to be allocated to the allocated axial force, the second value becomes smaller than the proportion (Ger) of the road-surface axial force (Fer) to be allocated to the allocated axial force.

5. The steering control unit according to any one of claims 1 to 4, wherein
the control circuit includes a steered-side limit reaction force calculation circuit (94) as the at least one additional reaction force calculation circuit (93), and
when output torque of a steered-side motor (43) that generates a steered force that steers the steered wheel is limited, the steered-side limit reaction force calculation circuit calculates a steered-side limit reaction force (Ft) as the at least one additional reaction force (Fo).

## Patentansprüche

1. Lenksteuereinheit zum Steuern eines Lenksystems (2), wobei das Lenksystem eine erste Struktur oder eine zweite Struktur aufweist, wobei die erste Struktur derart konfiguriert ist, dass eine Lenkeingabevorrichtung (3), die eine Lenkeingabe empfängt, mechanisch von einer Lenkbetätigungsvorrichtung (5) getrennt ist, die ein gelenktes Rad (4) in Übereinstimmung mit der Lenkeingabe lenkt, wobei die zweite Struktur derart konfiguriert ist, dass die Lenkeingabevorrichtung (3) selektiv mechanisch mit der Lenkbetätigungsvorrichtung (5) gekoppelt und von dieser entkoppelt wird, wobei die Lenksteuereinheit
eine Steuerschaltung (61) aufweist, die eine Betätigung eines lenkungsseitigen Motors (14) steuert, der die Lenkeingabevorrichtung (3) mit einer Lenkreaktionskraft versorgt, die der Lenkeingabe entgegenwirkt; wobei
die Steuerschaltung (61) eine Endreaktionskraft-Berechnungsschaltung (92) enthält, **dadurch gekennzeichnet, dass**
die Steuerschaltung mindestens eine Zusatz-Reaktionskraft-Berechnungsschaltung (93) und eine Reaktionskraft-Auswahlschaltung (96) enthält, wobei
wenn ein Lenkwinkel (θh) eines mit der Lenkeingabevorrichtung (3) gekoppelten Lenkrads einen Lenkwinkelschwellenwert (θie) überschreitet, der gemäß dem Lenksystem (2) eingestellt ist, die Endreaktionskraft-Berechnungsschaltung (92) eine Endreaktionskraft (Fie) berechnet, die die Lenkreaktionskraft basierend auf einer ersten Bedingung erhöht, die eine Zunahme eines Absolutwerts des Lenkwinkels (θh) anzeigt,
die mindestens eine Zusatz-Reaktionskraft-Berechnungsschaltung (93) mindestens eine Zusatz-Reaktionskraft (Fo) berechnet, die die Lenkreaktionskraft basierend auf einer zweiten Bedingung, die sich von der ersten Bedingung unterscheidet, erhöht,
die Reaktionskraft-Auswahlschaltung (96) eine Reaktionskraft mit einem größten Absolutwert aus der Endreaktionskraft (Fie) und der mindestens einen Zusatz-Reaktionskraft (Fo) auswählt, und
die Steuerschaltung (61) das Zielreaktionsdrehmoment (Ts*) als Zielwert für die Lenkreaktionskraft unter Berücksichtigung der durch die Reaktionskraft-Auswahlschaltschaltung (96) ausgewählten Reaktionskraft berechnet.

2. Lenksteuereinheit nach Anspruch 1, wobei
die mindestens eine Zusatz-Reaktionskraft-Berechnungsschaltung (93) die mindestens eine Zusatz-Reaktionskraft (Fo) basierend auf einem Verstärkungsfaktor (Go) berechnet, der einen Grad der Ähnlichkeit mit einer Situation darstellt, in der die mindestens eine Zusatz-Reaktionskraft (Fo) zugeführt werden muss.

3. Lenksteuereinheit nach Anspruch 1 oder 2, wobei
die Steuerschaltung (61) eine Hindernis-Treffer-Reaktionskraft-Berechnungsschaltung (93) als die mindestens eine Zusatz-Reaktionskraft-Berechnungsschaltung (93) enthält, und
wenn das gelenkte Rad (4) auf ein Hindernis trifft, die Hindernis-Treffer-Reaktionskraft-Berechnungsschaltung (93) eine Hindernis-Treffer-Reaktionskraft (Fo) als die mindestens eine Zusatz-Reaktionskraft (Fo) berechnet.

4. Lenksteuereinheit nach Anspruch 3, wobei
die Steuerschaltschaltung (61) ferner eine Ideal-Axialkraft-Berechnungsschaltung (102), eine Straßenoberflächen-Axialkraft-Berechnungsschaltung (101) und eine Zugeordnet-Axialkraft-Berechnungsschaltung (103) aufweist,
die Ideal-Axialkraft-Berechnungsschaltung eine Ideal-Axialkraft (Fib) berechnet, die auf einem ersten Wert basiert, der sich auf einen Drehwinkel (θh*) einer Drehwelle bezieht, wobei der Drehwinkel in den gelenkten Winkel des gelenkten Rades (4) konvertierbar ist,
die Straßenoberflächen-Axialkraft-Berechnungsschaltung (101) eine Straßenoberflächen-Axialkraft (Fer) berechnet, die auf Informationen über eine Straßenoberfläche basiert,
die Zugeordnet-Axialkraft-Berechnungsschaltung eine Zugeordnet-Axialkraft (Fd) berechnet, der die Ideal-Axialkraft (Fib) und die Straßenoberflächen-Axialkraft (Fer) in einem vorbestimmten Zuordnungsverhältnis zugeordnet sind,
die Steuerschaltung (61) das Zielreaktionsdrehmoment (Ts*) unter Berücksichtigung einer Summe aus der von der Reaktionskraft-Auswahlschaltung (96) ausgewählten Reaktionskraft (Fsl) und der Zugeordnet-Axialkraft (Fd) berechnet,
die Hindernis-Treffer-Reaktionskraft-Berechnungsschaltung (93) einen Hindernis-Treffer-Verstärkungsfaktor (Go) basierend auf einem Produkt aus einem Stromverstärkungsfaktor (Goi) und einem zweiten Wert berechnet und die Hindernis-Treffer-Reaktionskraft (Fo) basierend auf dem Hindernis-Treffer-Verstärkungsfaktor berechnet,
der Stromverstärkungsfaktor einem dritten Wert entspricht, der sich auf einen Antriebsstrom (Iqt) bezieht, der einem Gelenkt-Seitigen Motor (43) zugeführt wird, der eine gelenkte Kraft erzeugt, die das gelenkte Rad lenkt,
der zweite Wert berechnet wird, indem ein vorbestimmter Wert von einem Anteil (Ger) der Straßenoberflächen-Axialkraft (Fer), der der Zugeordnet-Axialkraft (Fd) zuzuordnen ist, subtrahiert wird, und
der vorbestimmte Wert derart eingestellt ist, dass, wenn der Anteil (Ger) der der Zugeordnet-Axialkraft zuzuordnenden Straßenoberflächen-Axialkraft (Fer) einen Anteil (Gib) der der Zugeordnet-Axialkraft zuzuordnenden Ideal-Axialkraft (Fib) überschreitet, der zweite Wert kleiner wird als der Anteil (Ger) der der Zugeordnet-Axialkraft zuzuordnenden Straßenoberflächen-Axialkraft (Fer).

5. Lenksteuereinheit nach einem der Ansprüche 1 bis 4, wobei
die Steuerschaltung eine Gelenkt-Seitig-Grenzreaktionskraft-Berechnungsschaltung (94) als die mindestens eine Zusatz-Reaktionskraft-Berechnungsschaltung (93) aufweist, und
wenn das Ausgangsdrehmoment eines Gelenkt-Seitigen Motors (43), der eine gelenkte Kraft erzeugt, die das gelenkte Rad lenkt, begrenzt wird, die Gelenkt-Seitig-Grenzreaktionskraft-Berechnungsschaltung eine Gelenkt-Seitig-Grenzreaktionskraft (Ft) als die mindestens eine Zusatz-Reaktionskraft (Fo) berechnet.

## Revendications

1. Unité de commande de direction destinée à commander un système de direction (2), le système de direction ayant une première structure ou une deuxième structure, la première structure étant telle qu'un dispositif d'entrée de direction (3) qui reçoit une entrée de direction est mécaniquement séparé d'un dispositif d'actionnement de direction (5) qui braque une roue directrice (4) en fonction de l'entrée de direction, la deuxième structure étant telle que le dispositif d'entrée de direction (3) est mécaniquement couplé et découplé de manière sélective au et du dispositif d'actionnement de direction (5), l'unité de commande de direction comprenant :
un circuit de commande (61) qui commande un actionnement d'un moteur du côté direction (14) qui délivre au dispositif d'entrée de direction (3) une force de réaction de direction qui s'oppose à l'entrée de direction ;
le circuit de commande (61) comprenant un circuit de calcul de force de réaction finale (92),
**caractérisée en ce que**
le circuit de commande comprend au moins un circuit de calcul de force de réaction additionnelle (93), et un circuit de sélecteur de force de réaction (96), dans laquelle
quand un angle de direction (θh) d'un volant de direction couplé au dispositif d'entrée de direction (3) dépasse un seuil d'angle de direction (θie) qui est établi en fonction du système de direction (2), le circuit de calcul de force de réaction finale (92) calcule une force de réaction finale (Fie) qui augmente la force de réaction de direction sur la base d'une première condition qui indique une augmentation en valeur absolue de l'angle de direction (θh),
le au moins un circuit de calcul de force de réaction additionnelle (93) calcule au moins une force de réaction additionnelle (Fo) qui augmente la force de réaction de direction sur la base d'une deuxième condition différente de la première condition,
le circuit de sélecteur de force de réaction (96) sélectionne une force de réaction avec une valeur absolue la plus grande à partir de la force de réaction finale (Fie) et de la au moins une force de réaction additionnelle (Fo), et
le circuit de commande (61) calcule un couple de réaction de cible (Ts*) comme valeur de cible pour la force de réaction de direction en prenant en compte la force de réaction sélectionnée par le circuit de sélecteur de force de réaction (96).

2. Unité de commande de direction selon la revendication 1, dans laquelle
le au moins un circuit de calcul de force de réaction additionnelle (93) calcule la au moins une force de réaction additionnelle (Fo) sur la base d'un gain (Go) qui représente un degré de similitude avec une situation où la au moins une force de réaction additionnelle (Fo) doit être délivrée.

3. Unité de commande de direction selon la revendication 1 ou 2, dans laquelle
le circuit de commande (61) comprend un circuit de calcul de force de réaction de contact d'obstacle (93) comme le au moins un circuit de calcul de force de réaction additionnelle (93), et
quand la roue (4) touche un obstacle, le circuit de calcul de force de réaction de contact d'obstacle (93) calcule une force de réaction de contact d'obstacle (Fo) comme la au moins une force de réaction additionnelle (Fo).

4. Unité de commande de direction selon la revendication 3, dans laquelle
le circuit de commande (61) comprend en outre un circuit de calcul de force axiale idéale (102), un circuit de calcul de force axiale de surface de route (101), et un circuit de calcul de force axiale allouée (103),
le circuit de calcul de force axiale idéale calcule une force axiale idéale (Fib) qui est basée sur une première valeur liée à un angle de rotation (θh*) d'un arbre de rotation, l'angle de rotation étant convertible avec l'angle de braquage de la roue directrice (4),
le circuit de calcul de force axiale de surface de route (101) calcule une force axiale de surface de route (Fer) qui est basée sur de l'information concernant une surface de route,
le circuit de calcul de force axiale allouée calcule une force axiale allouée (Fd) à laquelle la force axiale idéale (Fib) et la force axiale de surface de route (Fer) sont allouées dans un rapport d'attribution prédéterminé,
le circuit de commande (61) calcule le couple de réaction de cible (Ts*) en prenant en compte une somme de la force de réaction (Fsl) sélectionnée par le circuit de sélecteur de force de réaction (96) et de la force axiale allouée (Fd),
le circuit de calcul de force de réaction de contact d'obstacle (93) calcule un gain de contact d'obstacle (Go) sur la base d'un produit d'un gain en courant (Goi) et d'une deuxième valeur, et calcule la force de réaction de contact d'obstacle (Fo) sur la base du gain de contact d'obstacle,
le gain en courant correspond à une troisième valeur liée à un courant d'entraînement (Iqt) délivré à un moteur du côté dirigé (43) qui génère une force directrice qui oriente la roue directrice,
la deuxième valeur est calculée en soustrayant une valeur prédéterminée d'une proportion (Ger) de la force axiale de surface de route (Fer) devant être allouée à la force axiale allouée (Fd), et
la valeur prédéterminée est établie de telle sorte que, quand la proportion (Ger) de la force axiale de surface de route (Fer) devant être allouée à la force axiale allouée dépasse une proportion (Gib) de la force axiale idéale (Fib) devant être allouée à la force axiale allouée, la deuxième valeur devient plus petite que la proportion (Ger) de la force axiale de surface de route (Fer) devant être allouée à la force axiale allouée.

5. Unité de commande de direction selon l'une quelconque des revendications 1 à 4, dans laquelle
le circuit de commande comprend un circuit de calcul de force de réaction de limite du côté braqué (94) comme le au moins un circuit de calcul de force de réaction additionnelle (93), et
quand le couple de sortie d'un moteur du côté braqué (43) qui génère une force directrice qui braque la roue directrice est limité, le circuit de calcul de force de réaction de limite du côté braqué calcule une force de réaction de limite du côté braqué (Ft) comme la au moins une force de réaction additionnelle (Fo).
